# EUROPEAN PATENT SPECIFICATION

(11) **EP 3 540 671 B1**
(45) Date of publication and mention of the grant of the patent: **09.03.2022**
(21) Application number: 19168272.3
(22) Date of filing: 20.11.2014
(51) Int. Cl.: G06Q 20/22

(54) **SYSTEMS AND METHODS FOR SOFTWARE BASED ENCRYPTION**
SYSTEME UND VERFAHREN ZUR SOFTWAREBASIERTEN VERSCHLÜSSELUNG
SYSTÈMES ET PROCÉDÉS DE CHIFFREMENT BASÉ SUR UN LOGICIEL

(30) Priority: 20.11.2013 US 201361906844 P; 19.11.2014 US 201414548122
(43) Date of publication of application: 18.09.2019
(62) Divisional of application: 14194037.9
(73) Proprietor: Visa International Service Association, San Francisco, California 94128 (US)
(72) Inventor: ZLOTH, Sue, Castle Pines, CO Colorado 80108 (US); TAIT, Paul, San Mateo, CA California 94403 (US); WAGNER, Kim, Sunnyvale, CA California 94087 (US); POWELL, Glenn, Fremont, CA California 94539 (US)
(74) Representative: EIP

(56) References cited:
- US-A1- 2002 013 765
- US-A1- 2002 133 467
- US-A1- 2013 024 686

## Description

### BACKGROUND OF THE INVENTION

Point of sale (POS) terminals are often used by merchants and other entities to conduct transactions. For example, a user may present a credit card or other device to the POS terminal, which may read payment data (e.g., a primary account number) from the device. The POS terminal may then conduct a transaction using the payment data.

As the connectivity and capability of general-purpose computing devices such as mobile phones, tablets, and desktop computers increases, the desire by merchants to use such devices as POS terminals continues to grow. However, ensuring the security of sensitive information such as payment data on devices that have not been specifically manufactured for that purpose continues to be a concern. In particular, it may be difficult to provision such devices to securely store and transmit sensitive information.

Embodiments of the present invention address these problems and other problems individually and collectively.

Reference is made to US 2002/013765 A1, which relates to an intrinsic authorization for electronic transactions, to US 2002/133467, which relates to online card present transactions, and US 2013/024686, which relates to secure communication using a message specific identifier.

### BRIEF SUMMARY OF THE INVENTION

Embodiments of the invention generally relate to systems and methods for securely provisioning a merchant payment computer with one or more encryption keys, and using the encryption keys to encrypt transaction data.

For some embodiments, a method is disclosed comprising receiving, by a merchant payment computer, a signed digital certificate from a merchant management computer, sending the digital certificate and a device identifier to a key management computer, receiving, from the key management computer, an initial encryption key, receiving transaction data for a transaction, encrypting the transaction data using the initial encryption key, sending the encrypted transaction data to a payment processing network, and receiving an indication of whether the transaction was approved or declined.

For some embodiments, a merchant payment computer is disclosed. The merchant payment computer comprises a processor and a non-transitory computer-readable storage medium comprising code executable by the processor for implementing a method comprising receiving a signed digital certificate from a merchant management computer, sending the digital certificate and a device identifier to a key management computer, receiving, from the key management computer, an initial encryption key, receiving transaction data for a transaction, encrypting the transaction data using the initial encryption key, sending the encrypted transaction data to a payment processing network, and receiving an indication of whether the transaction was approved or declined.

For some embodiments, a system is disclosed. The system comprises a merchant management computer configured to authenticate a merchant payment computer, and transmit to the merchant payment computer a signed digital certificate if the merchant payment computer is authenticated. The system also comprises a key management computer configured to receive from the merchant payment computer the digital certificate, and provide to the merchant payment computer an initial encryption key if the signed digital certificate is verified. The system further comprises the merchant payment computer, wherein the merchant payment computer is configured to obtain the digital certificate and the initial encryption key, wherein the merchant payment computer is further configured to encrypt, using the initial encryption key, transaction data for a transaction conducted by the merchant payment computer.

### BRIEF DESCRIPTION OF THE DRAWINGS

FIG. 1 shows an example of a payment system that may be used with embodiments of the invention.
FIG. 2 shows an example of a merchant payment computer according to some embodiments of the invention.
FIG. 3 shows an example of a merchant management computer according to some embodiments of the invention.
FIG. 4 shows an example of a key management computer according to some embodiments of the invention.
FIG. 5 shows an example of a payment processing network computer according to some embodiments of the invention.
FIG. 6 shows a method for provisioning a merchant payment computer with a merchant payment computer certificate.
FIG. 7 shows an example flow diagram illustrating the provisioning of a merchant payment computer certificate.
FIG. 8 shows a method for generating and storing future encryption keys on a merchant payment computer.
FIG. 9 shows a flow diagram illustrating the provisioning of a merchant payment computer with an initial encryption key.
FIG. 10 shows a method for encrypting sensitive data and conducting a payment transaction using a merchant payment computer.
FIG. 11 shows a flow diagram illustrating a payment transaction conducted by a merchant payment computer.
FIG. 12 shows a flow diagram illustrating the types of encryption keys used according to one embodiment of the invention.
FIG. 13 shows an example of a consumer device according to some embodiments of the invention.
FIG. 14 shows a block diagram of an exemplary computer apparatus.

### TERMS

Prior to discussing embodiments of the invention, description of some terms may be helpful in understanding embodiments of the invention.

The term "server computer" may include a powerful computer or cluster of computers. For example, the server computer can be a large mainframe, a minicomputer cluster, or a group of servers functioning as a unit. In one example, the server computer may be a database server coupled to a Web server. The server computer may be coupled to a database and may include any hardware, software, other logic, or combination of the preceding for servicing the requests from one or more client computers. The server computer may comprise one or more computational apparatuses and may use any of a variety of computing structures, arrangements, and compilations for servicing the requests from one or more client computers.

The term "sensitive data" may include any data or information that is intended to be kept private, is susceptible to misuse, or as otherwise known in the art. Examples of payment data may include a user's payment details (e.g., a credit card number), a social security number, or a password.

A "device identifier" may include any data suitable to identify a device, such as a merchant payment computer. In some cases, a device identifier may include a serial number or other data that is typically unique to a device, such as a MAC address or an IMEI. In some cases, the device identifier may be randomly generated (e.g., a random number). In some cases, the device identifier may be algorithmically generated, such as by a combination of information relating to a device, such as the model number of the device, the hardware configuration of the device, an IP or MAC address of the device, or any other suitable data.

A "public/private key pair" may include a pair of linked cryptographic keys generated by an entity. The public key may be used for public functions such as encrypting a message to send to the entity or for verifying a digital signature which was supposedly made by the entity. The private key, on the other hand may be used for private functions such as decrypting a received message or applying a digital signature. The public key will usually be authorized by a body known as a Certification Authority (CA) which stores the public key in a database and distributes it to any other entity which requests it. The private key will typically be kept in a secure storage medium and will usually only be known to the entity. However, the cryptographic systems described herein may feature key recovery mechanisms for recovering lost keys and avoiding data loss.

A "digital signature" may refer to the result of applying an algorithm based on a public/private key pair, which allows a signing party to manifest, and a verifying party to verify, the authenticity and integrity of a document. Typically,the signing party acts by means of the private key and the verifying party acts by means of the public key. This process certifies the authenticity of the sender, the integrity of the signed document and the so-called principle of nonrepudiation, which does not allow disowning what has been signed. A certificate or other data that includes a digital signature by a signing party is said to be "signed" by the signing party.

A "certificate" or "digital certificate" may include an electronic document or data file that uses a digital signature to bind a public key with data associated with an identity. The certificate may include one or more data fields, such as the legal name of the identity, a serial number of the certificate, a valid-from and valid-to date for the certificate, certificate-related permissions, etc. A certificate may contain a "valid-from" date indicating the first date the certificate is valid, and a "valid-to" date indicating the last date the certificate is valid. A certificate may also contain a hash of the data in the certificate including the data fields. Unless otherwise noted, each certificate is signed by a certificate authority.

A "certificate authority" (CA) may include one or more server computers operatively coupled to issue certificates to entities. The CA may prove its identity using a CA certificate, which includes the CA's public key. The CA certificate may be signed by another CA's private key, or may be signed by the same CA's private key. The latter is known as a self-signed certificate. The CA also typically maintains a database of all certificates issued by the CA.

In a typical process, the certificate authority receives an unsigned certificate from an entity whose identity is known. The unsigned certificate includes a public key, one or more data fields, and a hash of the data in the certificate. The CA signs the certificate with a private key corresponding to the public key included on the CA certificate. The CA may then store the signed certificate in a database, and issue the signed certificate to the entity.

A "merchant payment computer certificate" may include any digital certificate attesting the identity of a merchant payment computer. Typically, the merchant payment computer certificate may include a public key of a public/private key pair associated with the merchant payment computer and other information relating to the merchant computer, such as a device identifier of the merchant payment computer, and a merchant name or other merchant identifier associated with the merchant payment computer. The merchant payment computer certificate may be signed by a certificate authority or by another trusted third party. Examples of such trusted third parties may include a key management computer, a payment processing network, and an issuer computer.

A "base derivation key" (BDK) may include any encryption key or other data that can be used to derive a plurality of encryption keys. A base derivation key may be symmetric or asymmetric. For example, in various embodiments, a base derivation key may be in AES, DES, Blowfish, RSA, ECC, or any other suitable key format. The base derivation key may also be used to derive an initial encryption key or other data.

An "initial encryption key" (IEK) may include any encryption key or other data derived from a base derivation key, and that can be used to further derive other encryption keys. An initial encryption key may be symmetric or asymmetric. For example, in various embodiments, an initial encryption key may be in AES, DES, Blowfish, RSA, ECC, or any other suitable key format. The initial encryption key may also be used to derive a future encryption key. A future encryption key may be derived from an initial encryption key in any suitable manner. For example, a key derivation function (e.g., PBKDF2) may be used to combine a initial encryption key with a "key serial number" (e.g., a number) to produce a future encryption key.

A "future encryption key" may include any encryption key or other data derived from an initial encryption key, and that may be used to encrypt data. A future encryption key may be symmetric or asymmetric. For example, in various embodiments, a future encryption key may be in AES, DES, Blowfish, RSA, ECC, or any other suitable key format. In some cases, each future encryption key may be used to encrypt transaction data for a single transaction.

### DETAILED DESCRIPTION OF THE INVENTION

Embodiments of the invention generally relate to systems and methods for securely provisioning a merchant payment computer with one or more encryption keys, and using the encryption keys to encrypt transaction data.

Embodiments of the invention may provide several advantages. For example, embodiments can improve the security of payment transactions using a merchant payment computer. In some embodiments, the merchant payment computer may obtain a digital certificate attesting the identity of the merchant payment computer. The digital certificate may then be used to securely provision the merchant payment computer with one or more future keys provided by a key management computer. This allows the merchant payment computer to encrypt sensitive transaction data, thus preventing unauthorized parties from accessing the sensitive data while allowing a payment processing network or other authorized entity to decrypt the data.

### I. SYSTEMS

### A. Overall System

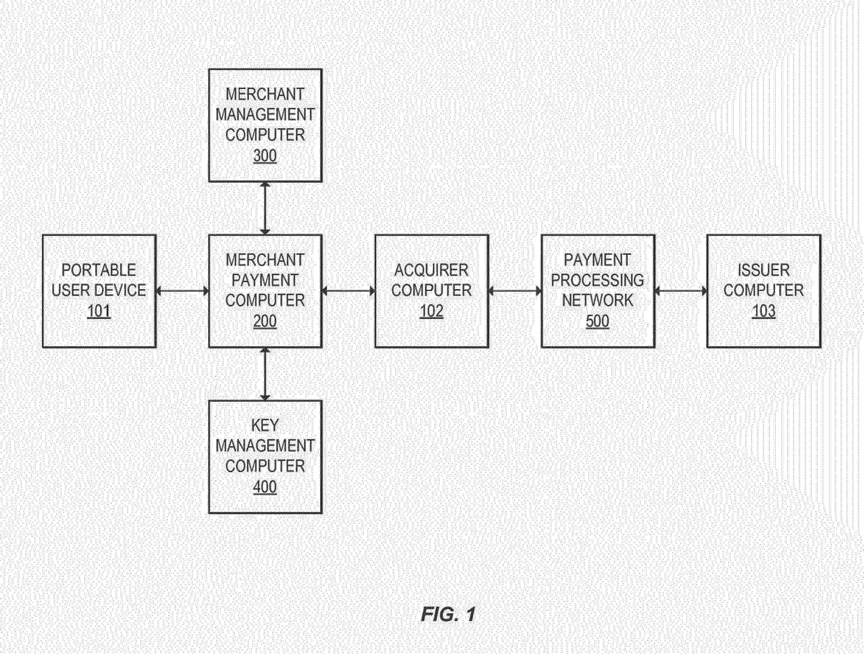

FIG. 1 shows a system according to an embodiment of the invention. The system comprises a user (not shown) who may operate a portable user device 101, such as a payment card, mobile phone, tablet, or other device. The user may use portable user device 101 to conduct payment transactions in communication with a merchant payment computer 200. A "merchant payment computer" may include a mobile phone, tablet, desktop, electronic cash register (ECR) or any other computing device suitable for conducting payment transactions. In some embodiments, the merchant payment computer 200 may include a peripheral or other hardware to read the portable user device 101 (e.g., a magnetic card reader, contactless reader, etc.). Merchant payment computer 200 may be connected to acquirer computer 102. Acquirer computer 102 may be connected to issuer computer 103 via payment processing network 500.

Merchant payment computer 200 may also be connected to a merchant management computer 300 and a key management computer 400. In some embodiments, merchant management computer 300 or key management computer 400 may be associated with or integrated into acquirer computer 102, payment processing network 500, or issuer computer 103.

As used herein, an "issuer" may typically refer to a business entity *(e.g.,* a bank) that maintains financial accounts for a user and often issues a portable user device 101 such as a credit or debit card to the user. A "merchant" is typically an entity that engages in transactions and can sell goods or services. An "acquirer" is typically a business entity (e.g., a commercial bank) that has a business relationship with a particular merchant or other entity. Some entities can perform both issuer and acquirer functions. Some embodiments may encompass such single entity issuer-acquirers. Each of the entities may comprise one or more computer apparatuses (e.g., merchant payment computer 200, acquirer computer 102, payment processing network 500, and issuer computer 103) to enable communications, or to perform one or more of the functions described herein.

The payment processing network 500 may include data processing subsystems, networks, and operations used to support and deliver certificate authority services, authorization services, exception file services, transaction scoring services, and clearing and settlement services. An exemplary payment processing network may include VisaNet^{™}. Payment processing networks such as VisaNet^{™} are able to process credit card transactions, debit card transactions, and other types of commercial transactions. VisaNet^{™}, in particular, includes a VIP system (Visa Integrated Payments system) which processes authorization requests and a Base II system which performs clearing and settlement services.

The payment processing network 500 may include one or more server computers. A server computer is typically a powerful computer or cluster of computers. For example, the server computer can be a large mainframe, a minicomputer cluster, or a group of servers functioning as a unit. In one example, the server computer may be a database server coupled to a Web server. The payment processing network 500 may use any suitable wired or wireless network, including the Internet.

In some payment transactions, the user purchases a good or service at a merchant associated with merchant payment computer 200 using a portable user device 101. The user's portable user device 101 can interact with an access device connected to merchant payment computer 200. For example, the user may tap the portable user device 101 against an NFC reader in the access device . Alternately, the user may indicate payment details to the merchant electronically, such as in an online transaction.

An authorization request message may be generated by merchant payment computer 200 and then forwarded to the acquirer computer 102. After receiving the authorization request message, the authorization request message is then sent to the payment processing network 500. The payment processing network 500 then forwards the authorization request message to the corresponding issuer computer 103 associated with an issuer associated with the user.

An "authorization request message" may be an electronic message that is sent to a payment processing network and/or an issuer of a payment card to request authorization for a transaction. An authorization request message according to some embodiments may comply with ISO 8583, which is a standard for systems that exchange electronic transaction information associated with a payment made by a user using a payment device or payment account. The authorization request message may include an issuer account identifier that may be associated with a payment device or payment account (e.g., a bank identification number). An authorization request message may also comprise additional data elements corresponding to "identification information" including, by way of example only: a service code, a CVV (card verification value), a dCVV (dynamic card verification value), an expiration date, etc. An authorization request message may also comprise "transaction information," such as any information associated with a current transaction, such as the transaction amount, merchant identifier, merchant location, etc., as well as any other information that may be utilized in determining whether to identify and/or authorize a transaction. The authorization request message may also include other information such as information that identifies the access device or merchant payment computer 200 that generated the authorization request message, information about the location of the merchant, etc.

After the issuer computer 103 receives the authorization request message, the issuer computer 103 sends an authorization response message back to the payment processing network 500 to indicate whether the current transaction is authorized (or not authorized). The payment processing network 500 then forwards the authorization response message back to the acquirer computer 102. In some embodiments, payment processing network 500 may decline the transaction even if issuer computer 103 has authorized the transaction, for example depending on a value of a fraud risk score. The acquirer computer 102 then sends the response message back to the merchant payment computer 200.

An "authorization response message" may be an electronic message reply to an authorization request message generated by an issuing financial institution 103 or a payment processing network 500. The authorization response message may include, by way of example only, one or more of the following status indicators: Approval -- transaction was approved; Decline -- transaction was not approved; or Call Center -- response pending more information, merchant must call the toll-free authorization phone number. The authorization response message may also include an authorization code, which may be a code that a credit card issuing bank returns in response to an authorization request message in an electronic message (either directly or through the payment processing network 500) to the merchant payment computer 200 that indicates approval of the transaction. The code may serve as proof of authorization. As noted above, in some embodiments, a payment processing network 500 may generate or forward the authorization response message to the merchant.

After the merchant payment computer 200 receives the authorization response message, the merchant payment computer 200 may then provide the authorization response message for the user. The response message may be displayed by the merchant payment computer 200 or portable user device 101, or may be printed out on a physical receipt. Alternately, if the transaction is an online transaction, the merchant may provide a web page or other indication of the authorization response message as a virtual receipt. The receipts may include transaction data for the transaction.

At the end of the day, a normal clearing and settlement process can be conducted by the payment processing network 500. A clearing process is a process of exchanging financial details between an acquirer and an issuer to facilitate posting to a customer's payment account and reconciliation of the user's settlement position.

### B. Merchant Payment Computer

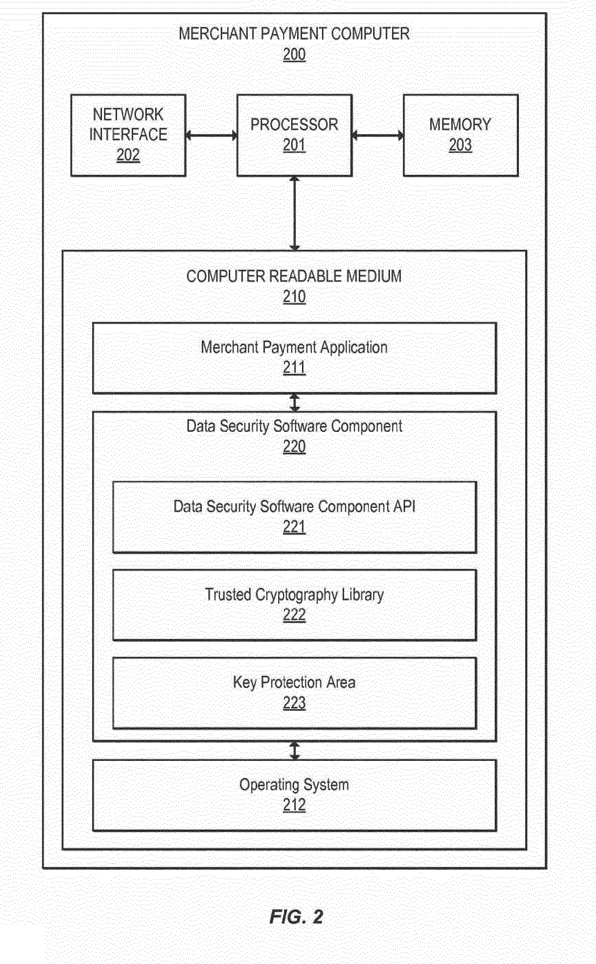

FIG. 2 shows an example of a merchant payment computer 200 according to some embodiments of the invention. Examples of merchant payment computer 200 may include mobile phones, tablets, desktops, electronic cash registers (ECRs) or any other computing device suitable for conducting payment transactions. The merchant payment computer 200 may include a processor 201 communicatively coupled to a network interface 202, a memory 203, and a computer readable medium 210.

The processor 201 can comprise a CPU, which comprises at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s). The CPU interacts with memory through signal passing through conductive conduits to execute stored signal program code according to conventional data processing techniques.

The network interface 202 may be configured to allow the merchant payment computer 200 to communicate with other entities such as the portable user device 101, merchant management computer 300, key management computer 400, acquirer computer 102, payment processing network 500, issuer computer 103, etc. using one or more communications networks. Network interfaces may accept, communicate, and/or connect to a communications network. Network interfaces may employ connection protocols such as, but not limited to: direct connect, Ethernet (thick, thin, twisted pair 10/100/1000 Base T, and/or the like), Token Ring, wireless connection such as IEEE 802.11 a-x, and/or the like. A communications network may be any one and/or the combination of the following: a direct interconnection; the Internet; a Local Area Network (LAN); a Metropolitan Area Network (MAN); a secured custom connection; a Wide Area Network (WAN); a wireless network (e.g., employing protocols such as, but not limited to a Wireless Application Protocol (WAP), I-mode, and/or the like); and/or the like.

The memory 203 may be used to store data. The memory 203 may be coupled to the processor 201 internally or externally (e.g., cloud based data storage) and may comprise any combination of volatile and/or non-volatile memory, for example, RAM, DRAM, ROM, flash, or any other suitable memory device.

The computer readable medium 210 may be in the form of a memory (e.g., flash, ROM, etc.) and may comprise code, executable by the processor 201 for implementing methods described herein. The computer readable medium 210 may include a merchant payment application 211, a data security software component 220, and an operating system 212.

Merchant payment application 211 may be any application, program, executable instructions, or other feature of the merchant payment computer 200 configured to receive input to conduct a payment transaction. For example, merchant payment application 211 may be a cash register or point of sale app on a tablet computer, a web application configured to present a user with a merchant website, or a configuration of an electronic cash register.

Data security software component 220 may include any application, service, or executable instructions, or other feature of the merchant payment computer 200 configured to provide data security functionality to merchant payment computer 200. In some embodiments, data security software component 220 may be downloaded from an external source (e.g., merchant management computer 300). Data security software component 220 may include a data security software component API 211, trusted cryptography library 212, and key protection area 213. Typically the data security software component 220 may be protected, so that it may be secure against tampering or unauthorized use. For example, some or all of data security software component 220 may be stored in a secure element or using host card emulation (HCE).

Data security software component API 221 may include any API, software library, or other interface between the merchant payment application 211 and trusted cryptography library 222, merchant management computer 300, key management computer 106. For example, API 221 may provide functions that allow merchant payment application 211 to authenticate to merchant management computer 300 to obtain a merchant payment computer (MPC) certificate, obtain a plurality of future keys, and encrypt transaction data using a future key.

Trusted cryptography library 222 may include any software library, executable code, or other functionality to perform cryptographic operations such as generating encryption keys, encrypting data using an encryption key, and securely transmitting data.

Key protection area 223 may be any hardware or software component operable to securely store and process encryption keys. For example, in some embodiments, key protection area 223 may include a trusted platform module (TPM), a secure cryptoprocessor, or a contactless integrated circuit.

Operating system 212 may be any suitable operating system of merchant payment computer 200. In some embodiments, operating system 212 may be modified to improve security.

In some embodiments, the merchant payment computer 200 may also include peripherals or other hardware to read the portable user device 101 (e.g., a magnetic card reader, contactless reader, etc.).

### C. Merchant Management Computer

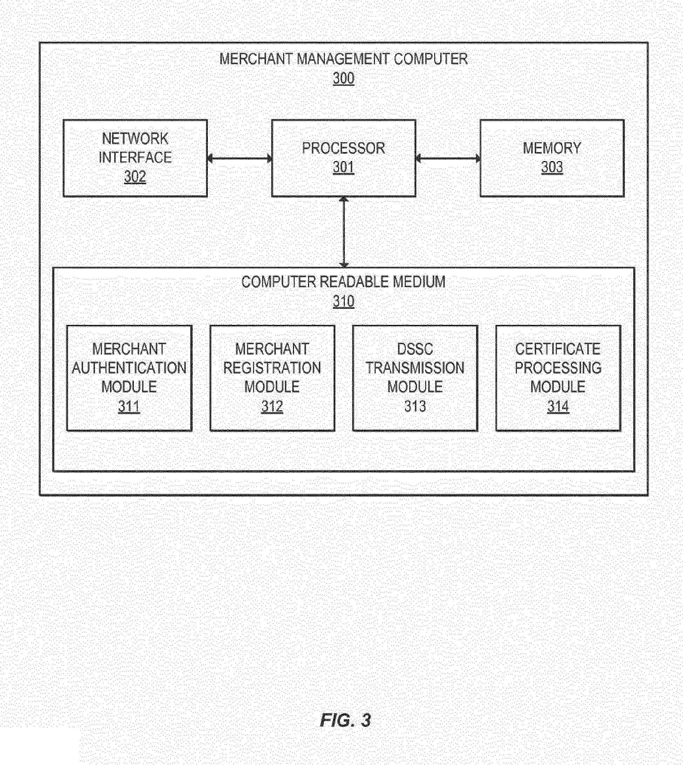

FIG. 3 shows an example of a merchant management computer 300 according to some embodiments of the invention. The merchant management computer 300 may include a processor 301 communicatively coupled to a network interface 302, a memory 303, and a computer readable medium 310.

The computer readable medium 310 may be in the form of a memory (e.g., flash, ROM, etc.) and may comprise code, executable by the processor 301 for implementing methods described herein. The computer readable medium 310 may include a merchant authentication module 311, a merchant registration module 312, a data security software component transmission module 313, and a certificate processing module 314.

Merchant authentication module 311 may be configured to authenticate merchants and merchant payment computers 200. For example, in some embodiments, merchant authentication module 311 may include a web service or other API accessible by merchant payment application 211 and data security software component 220, wherein the merchant authentication module 311 can accept and authenticate credentials provided by merchant payment computer 200. In some embodiments, merchant authentication module 311 may utilize a merchant database comprising authentication information for a plurality of merchants.

Merchant registration module 312 may be configured to register merchants and merchant payment computers 200. For example, once a merchant has been authenticated (e.g., by merchant authentication module 311), merchant registration module 312 may be operable to associate a device identifier for a merchant payment computer 200 with a corresponding merchant.

Data security software component (DSSC) transmission module 313 may be configured to transmit a data security software component to a merchant payment computer 200. In some embodiments, DSSC transmission module 313 may store data security software components for a plurality of operating systems, and provide to a merchant payment computer 200 a suitable DSSC for installation.

Certificate processing module 314 may be configured to receive, sign, and transmit merchant payment computer (MPC) certificates. For example, in some embodiments, once a merchant payment computer 200 has been authenticated (e.g., using merchant authentication module 311), registered (e.g., using merchant registration module 312), and loaded with a data security software component 220 (e.g., using DSSC transmission module 313), certificate processing module 314 may receive an unsigned MPC certificate from merchant payment computer 200. Certificate processing module 314 may then sign the MPC certificate and provide the signed MPC certificate to merchant payment computer 200. Thereafter, merchant payment computer 200 may use the signed MPC certificate to attest its identity.

### D. Key Management Computer

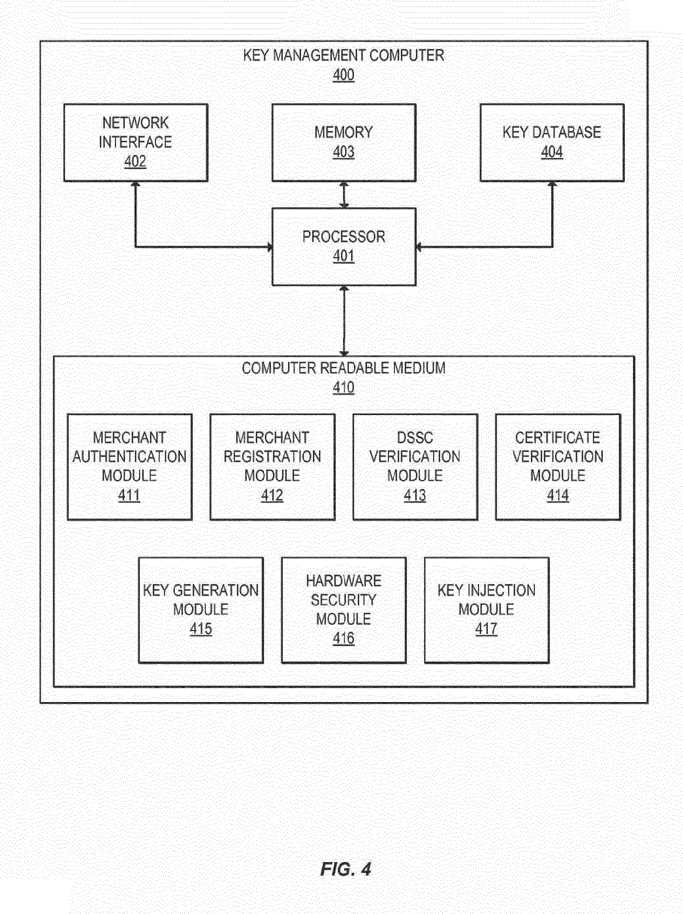

FIG. 4 shows an example of a key management computer 400 according to some embodiments of the invention. The key management computer 400 may include a processor 401 communicatively coupled to a network interface 402, a memory 403, a key database 404, and a computer readable medium 410.

The key database 404 may be any computer readable medium configured to store one or more base derivation keys. Key database may include, for example, a mapping between one or more merchant payment computers 200 and a corresponding base derivation key used to generate an initial encryption key for the merchant payment computer.

The computer readable medium 410 may be in the form of a memory (e.g., flash, ROM, etc.) and may comprise code, executable by the processor 401 for implementing methods described herein. The computer readable medium 410 may include a merchant authentication module 411, a merchant registration module 412, a data security software component verification module 413, a certificate verification module 414, a key generation module 415, a hardware security module 416, and a key injection module 417. However, it should be appreciated that in some embodiments, the functionality described for modules 411-417 may be implemented using dedicated hardware elements.

Merchant authentication module 411 may be configured to authenticate merchants and merchant payment computers 200. For example, in some embodiments, merchant authentication module 411 may include a web service or other API accessible by merchant payment application 211 and data security software component 220, wherein the merchant authentication module 411 can accept and authenticate credentials provided by merchant payment computer 200. In some embodiments, merchant authentication module 411 may utilize a merchant database comprising authentication information for a plurality of merchants.

Merchant registration module 412 may be configured to verify the registration of merchants and merchant payment computers 200. For example, merchant registration module 412 may be configured to determine a device identifier associated with a merchant payment computer 200, and determine whether the merchant payment computer 200 identifies itself as the correct device.

Data security software component (DSSC) verification module 413 may be configured to verify that a data security software component 220 on a mobile payment computer 200 is legitimate. For example, in some embodiments, DSSC verification module 413 may receive a hash or checksum value of data security software component 220, and compare the value with a known value for a legitimate copy of the application. If the value matches, then the DSSC may be verified. Otherwise, DSSC verification module 413 may determine that the DSSC has been tampered with or is otherwise not trustworthy.

Certificate verification module 414 may be configured to verify the authenticity of digital certificates, such as a MPC certificate provided by merchant payment computer 200. Verifying the authenticity of a certificate may include ensuring that a digital signature included on the certificate is signed by a trusted entity (such as a certificate authority), and that the digital signature matches an expected value. One method for verifying a digital signature is to use a digital signature algorithm (DSA) such as Elliptic Curve Digital Signature Algorithm (ECDSA).

Key generation module 415 may be configured to generate encryption keys, such as initial encryption keys provided to merchant payment computers. Key generation module 415 may generate keys in any suitable manner. For example, in some embodiments, key generation module 415 may use a key derivation function, such as PBKDF2, to combine one or more data elements into an encryption key. For example, in some embodiments, key generation module 415 may combine a base derivation key and a device identifier for a merchant payment computer to generate an initial encryption key for the merchant payment computer.

Hardware security module (HSM) 416 may include any software or hardware configured to store one or more encryption keys, and/or perform cryptographic operations. For example, in some embodiments, HSM 416 may store one or more base derivation keys. HSM 416 may also be configured to generate keys for key generation module 415, and verify digital signatures for certificate verification module 414.

Key injection module 417 may be configured to provide initial encryption keys to a merchant payment computer 200. For example, in some embodiments, key injection module 417 may transmit an initial encryption key to data security software component 220 on merchant payment computer 200, such that the initial encryption key is stored in key protection area 223.

### E. Payment Processing Network

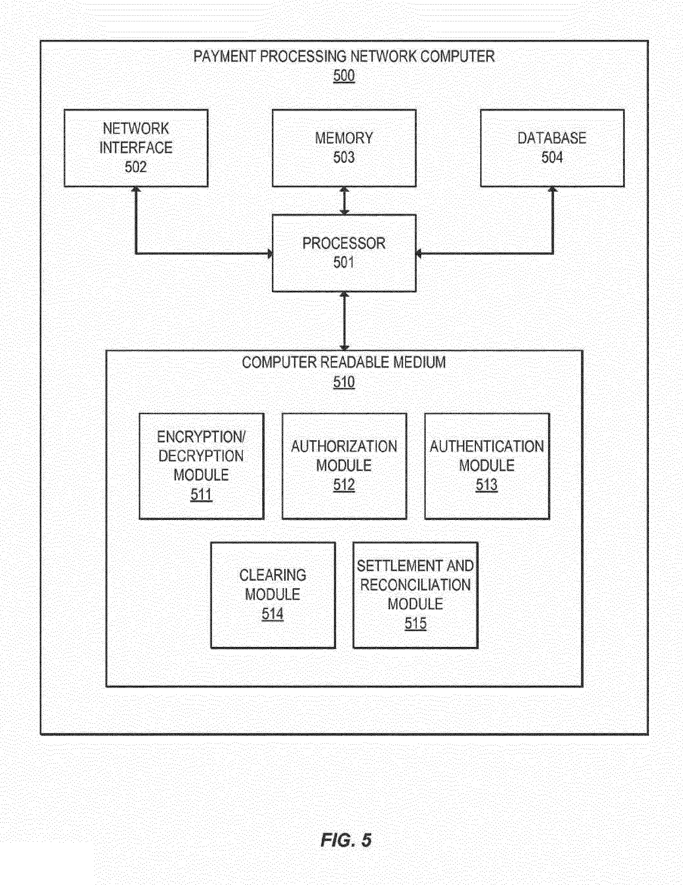

FIG. 5 illustrates components of the payment processing network computer 500 in one embodiment of the invention. In some embodiments, payment processing networks may be implemented using one or more payment processing network computers.

The payment processing network computer 500 may include a processor 501 communicatively coupled to a network interface 502, a memory 503, a database 504, and a computer readable medium 510. The network interface 502 may be configured to allow the payment processing network 500 to communicate with other entities such merchant payment computer 200, acquirer computer 102, and issuer computer 103, etc. using one or more communications networks.

The memory 503 may be used to store data. The memory 503 may be coupled to the processor 501 internally or externally (e.g., cloud based data storage) and may comprise any combination of volatile and/or non-volatile memory, for example, RAM, DRAM, ROM, flash, or any other suitable memory device. The database 504 may store data associated with a plurality of consumers such as consumer personal and payment account information.

The computer readable medium 510 may be in the form of a memory (e.g., flash, ROM, etc.) and may comprise code, executable by the processor 501 for implementing methods described herein. The computer readable medium 510 may include an encryption/decryption module 511, an authorization module 512, an authentication module 513, a clearing module 515, and a settlement and reconciliation module 516.

The encryption/decryption module 511 may be configured to decrypt encrypted transaction data, such as transaction data encrypted by merchant payment computer 200 and received in an authorization request message. In some embodiments, decrypting encrypted transaction data may comprise determining a base derivation key associated with merchant payment computer 200, deriving an initial encryption key using a device identifier of merchant payment computer 200, and deriving a future key used to decrypt the transaction using the initial encryption key and a transaction counter of the transaction. In some embodiments, encryption/decryption module 511 may inspect a key serial number (KSN) included in an authorization request message to determine a device identifier and a transaction counter to use when deriving a future key.

The authorization module 512 may comprise code, executable by the processor 502 to process an authorization request message and determine whether a transaction should be approved or declined. The authentication module 513 may comprise code that can be executed to the processor 501 to apply one or more authentication methods to authenticate transactions.

The clearing module 514 may be configured to process clearing transactions. A clearing process may be performed to reconcile orders among the transacting entities such as the issuer computer 103 and the acquirer computer 103/merchant computer 200. For example, clearing module 514 may generate a batch file comprising transactions between users associated with an issuer and merchants associated with an acquirer.

The settlement and reconciliation module 515 may be configured to process settlement and reconciliation transactions. Settlement and reconciliation transactions may involve the transfer of funds between one or more issuer computers 103 and acquirer computers 102 to settle pending transactions between users associated with an issuer and merchants associated with an acquirer.

### II. METHODS

### A. Provisioning A Merchant Payment Computer

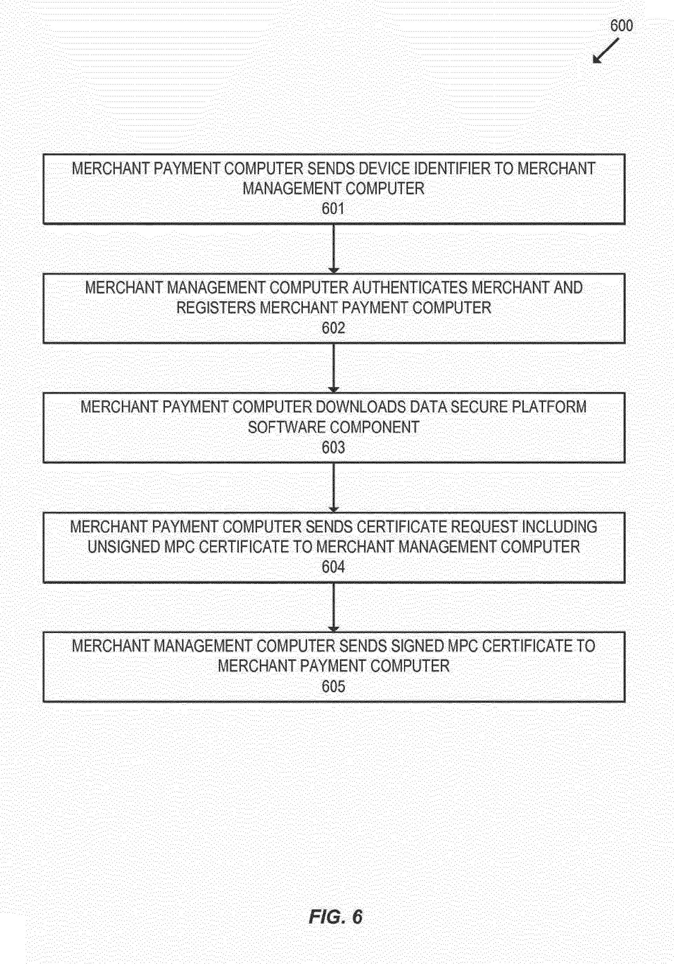

FIG. 6 illustrates a method 600 for provisioning a merchant payment computer 200 with a merchant payment computer certificate. In some embodiments, method 600 may be performed in order to provide a merchant with a certificate indicating the merchant's trustworthiness or authenticity and the identity of the merchant payment computer 200. Subsequently, the received merchant payment computer certificate may be used to download a data security software component 220.

At step 601, merchant payment computer 200 sends a device identifier to the merchant management computer 300. The device identifier may include any data suitable to identify the merchant payment computer 200. For example, the device identifier may be an IMEI (for mobile devices). In some embodiments, the device identifier may be generated by merchant payment computer 200. For example, the device identifier may be a globally unique identifier (GUID) or a public key generated by the computer 200.

At step 602, merchant management computer 300 authenticates the merchant and registers the merchant payment computer 200. Authentication of the merchant may be performed using any suitable means such as, but not limited to, prompting for account credentials (e.g., a password) or requesting other proof of identity. Registration of the merchant payment computer 200 may include associating the received device identifier with the merchant. The merchant management computer 300 may notify the merchant payment computer 200 of the success or failure of registration.

At step 603, merchant payment computer 200 downloads a data security software component 220. In some embodiments, the download of component 220 may only happen if merchant payment computer was successfully authenticated at step 602. In other embodiments, data security software component 220 may be downloaded before step 602, or at any other suitable time. In some embodiments, the data security software component 220 may be modified for the specific merchant payment computer 200.

At step 604, merchant payment computer 200 sends a certificate request including an unsigned merchant payment computer (MPC) certificate to merchant management computer 300. The request can be sent when a notification of a successful registration is received. The unsigned MPC certificate may include a public key from a public/private key pair generated by the merchant payment computer 200. In some embodiments, the MPC certificate may also include a field comprising the device identifier.

At step 605, merchant management computer 300 signs and returns the signed MPC certificate to the merchant payment computer 200. In some cases, as a prerequisite to signing the certificate, the merchant management computer 300 may verify that the certificate includes the device identifier previously registered to merchant payment computer 200. In this way, merchant management computer 300 may verify that the certificate is issued to the correct merchant payment computer 200. In some embodiments, the MPC certificate may be signed using a certificate authority other than the merchant management computer 300, such as payment processing network 500, issuer computer 103, or an external CA (e.g., Verisign, Thawte, etc.).

It should be understood that FIG. 6 is intended to be descriptive and non-limiting. For example, in some embodiments of the invention, the public-private key pair associated with the MPC certificate may be generated by the merchant management computer 300, and the merchant private key may be provided to the merchant computer 200 securely, for example using a Public-Key Cryptography Standards (PKCS) #12 message.

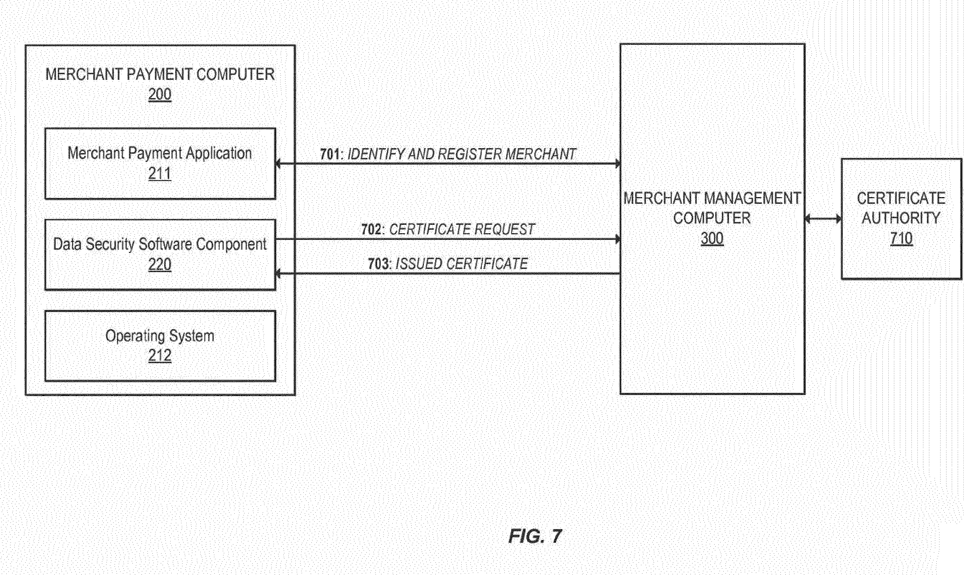

FIG. 7 shows a flow diagram illustrating the provisioning of a merchant payment computer certificate. As shown in FIG. 7, the merchant payment computer 200 and merchant management computer 300 may communicate using several messages 701 -703. In messages 701, merchant payment application 211 may identify and register the merchant payment computer 200 with merchant management computer 300. The identification and registration can be performed as described above.

At step 702, data security software component 220 of merchant payment computer 200 may send a certificate request to merchant management computer 300. The certificate request may include, for example, an unsigned certificate and a device identifier of merchant payment computer 200.

At step 703, merchant management computer 300 may return the issued or signed MPC certificate to data security software component 220. The merchant management computer 300 may be in communication with a certificate authority (CA) 710 to sign the MPC certificate, or may sign the MPC certificate itself.

### B. Generating And Storing Future Encryption Keys

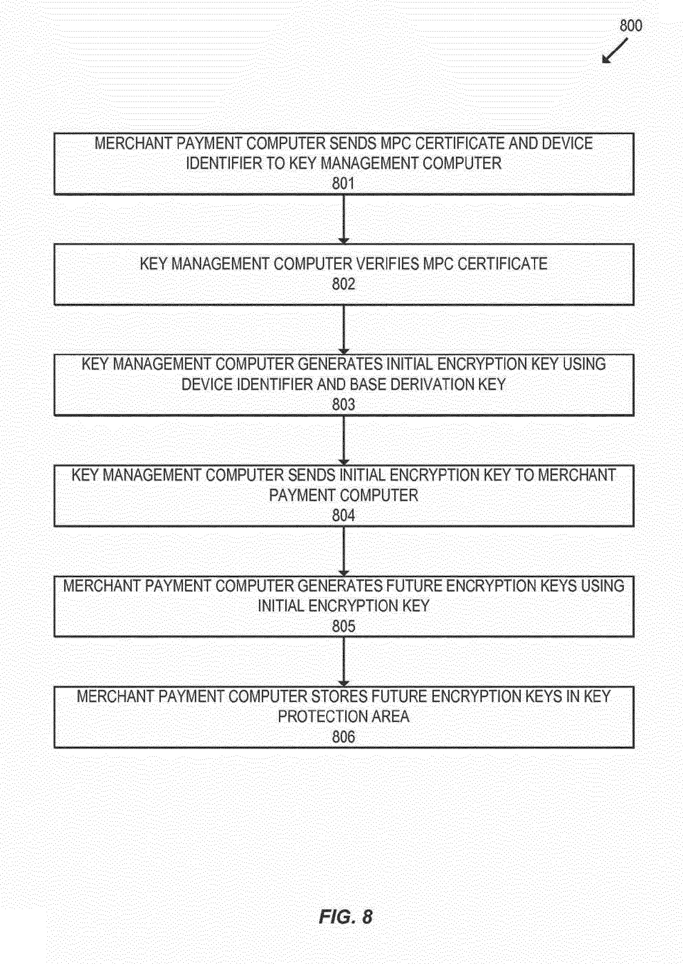

FIG. 8 shows a method 800 for generating and storing future encryption keys on a merchant payment computer, In some embodiments, method 800 may be performed after an MPC certificate has been provisioned (e.g., in accordance with method 600 of FIG. 6) and stored in the merchant payment computer 200. Subsequently to method 800, method 1000 may be performed in order to conduct a payment transaction for goods or services. In some embodiments, method 800 may be performed by a data security software component 220 on the merchant payment computer 200.

At step 801, merchant payment computer 200 sends the MPC certificate and device identifier to key management computer 400. In some embodiments, the key management computer 400 may provide the MPC certificate and the device identifier over a secure channel, such as an SSL connection,

At step 802, key management computer 400 verifies the MPC certificate. In some embodiments, verifying the MPC certificate may include verifying that the device identifier included in the certificate matches the device identifier provided by the merchant payment computer 200 at step 801. In addition, key management computer 400 may verify that the MPC certificate is authentic, for example by verifying the digital signature included in the MPC certificate.

At step 803, key management computer 400 generates an initial encryption key using the device identifier and a base derivation key (BDK). The base derivation key may be any encryption key kept secret by the key management computer 400, or as otherwise known in the art. In some embodiments, key management computer 400 may store a single BDK that is used for all initial encryption keys generated by key management computer 400. In other embodiments, one of a plurality of BDKs stored by key management compute 400 may be used to generate an initial encryption key. The BDK used may depend on any suitable factor(s), such as the manufacturer of merchant payment computer 200, an acquirer computer 102 associated with the merchant, or a payment processing network 500 associated with the merchant.

The initial encryption key may be generated such that the same device identifier and BOK may deterministically generate the same initial encryption key if performed again in the future. For example, in some embodiments, the initial encryption key may be derived using a key derivation function, such as PBKDF2. In some embodiments, the initial encryption key may be an "Initial PIN Encryption Key" (IPEK) as defined in by a derived unique key per transaction (DUKPT) standard (e.g., ANSI X9.24 part 1).

At step 804, key management computer 400 sends the initial encryption key to merchant payment computer 200. In some embodiments, the initial encryption key may be encrypted using the public key included in the MPC certificate, so that only the merchant payment computer 200 is able to decrypt and determine the initial encryption key.

At step 805, merchant payment computer 200 generates one or more future encryption keys using the initial encryption key. In some embodiments, the future encryption keys may be derived using a key derivation function. For example, in some embodiments, each future key may be derived through the combination of the initial encryption key and a transaction counter. The transaction counter can be, for example, an integerfrom 0 through 255 (for an 8-bit counter), or 0 through 65536 (for a 16-bit counter). In various embodiments, a plurality of future keys may be generated, such that a unique future key may be used for each transaction conducted using the merchant payment computer200.

At step 806, merchant payment computer 200 stores the generated future encryption keys in the key protection area 223. In some embodiments, after generating and storing the future encryption keys, merchant payment computer 200 may delete the initial encryption key. In some embodiments, in this manner, it may be impossible for the future keys to be re-derived without the initial encryption key.

It should be understood that FIG. 8 is intended to be descriptive and non-limiting. For example, in some embodiments of the invention, future keys may not be generated on the merchant payment computer 200. In some such embodiments, key management computer 400 may generate a plurality of future keys and transmit the future keys to merchant payment computer 200. In some embodiments, one or more encryption keys received from key management computer 400 may be directly used to encrypt sensitive data for one or more transactions.

In case the operating system 212 is reinstalled, or information stored on merchant payment computer 200 is otherwise lost, any suitable re-provisioning process may be performed. For example, if the future keys are lost, the merchant payment computer 200 may perform methods 600 and 800 using the original public/private key pair. In some embodiments, if the public/private key pair is lost, merchant payment computer 200 may re-register with a new public/private key pair (e.g., in accordance with method 600), and obtain new future keys (e.g., in accordance with method 800).

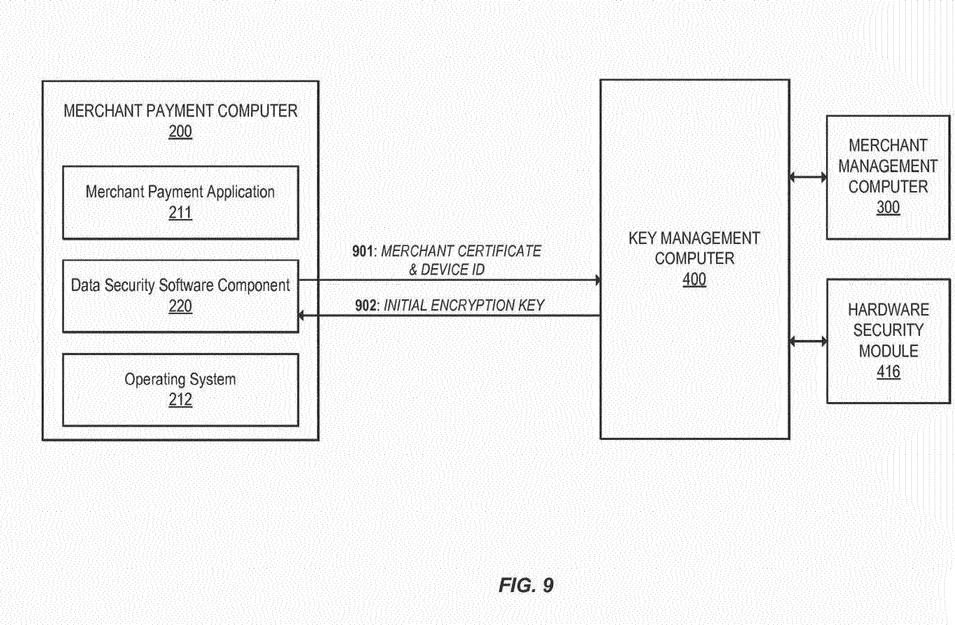

FIG. 9 shows a flow diagram illustrating the provisioning a merchant payment computer with an initial encryption key. As shown in FIG. 9, at step 901, data security software component 220 sends the MPC certificate and device identifier to key management computer 400. Subsequently, key management computer 400 verifies the certificate and device ID, and creates the initial encryption key.

At step 902, the key management computer 400 provides the initial encryption key to the merchant payment computer 200. In addition, the key management computer 106 may be in communication with merchant management computer 300 and hardware security module (HSM) 416. In some embodiments, HSM 416 may be used to store the BDK.

### C. Encrypting Sensitive Data For A Payment Transaction

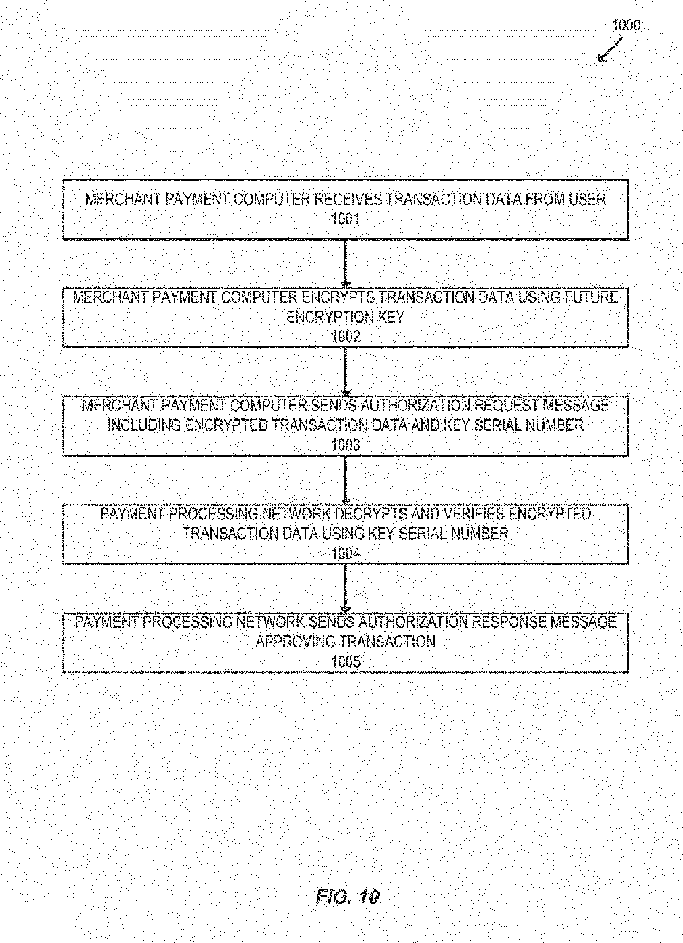

FIG. 10 shows a method 1000 for encrypting sensitive data and conducting a payment transaction using merchant payment computer 200. Typically, method 1000 may be performed after the merchant payment computer 200 has been fully provisioned (e.g., after methods 600 and 800 have been performed).

At step 1001, merchant payment computer 200 receives sensitive data for a transaction from a user. The sensitive data may be received in any suitable manner. For example, in some embodiments, the sensitive data may be read by an access device (e.g., a magnetic card reader or contactless reader) connected to merchant payment computer 200. Alternately, the sensitive data may be received over a network, such as in an e-commerce transaction. The sensitive data may be received by the merchant payment application 211 and passed to the data security software component 220 (e.g., using data security software component API 221).

At step 1002, merchant payment computer 200 encrypts the sensitive data using a future encryption key. If multiple future encryption keys, a future encryption key may be chosen in any suitable manner. In some embodiments, a future encryption key may be chosen such that it is unique for a transaction. For example, if the last future key was associated with a transaction counter of N, the future key associated with a transaction counter of N+1 may be chosen.

At step 1003, merchant payment computer 200 generates and sends an authorization request message including the encrypted transaction data and the key serial number of the future key used to encrypt the sensitive data. A "key serial number" (KSN) may include an identifier of a BDK used to generate an initial encryption key sent to the merchant payment computer 200 (e.g., as in step 804 of method 800), a device identifier for the merchant payment computer 200, a transaction counter associated with the future encryption key used in step 1002, or any other information usable to derive the future key at a trusted computer. The authorization request message may be sent to an acquirer computer 102 and forwarded to payment processing network 500 and issuer computer 103.

At step 1004, the payment processing network 500 decrypts and verifies the encrypted transaction data using the key serial number. In some embodiments, a BDK identifier included in the KSN may be used to retrieve a BDK associated with the transaction. The BDK and the device identifier in the KSN may then be used to generate the initial encryption key for the merchant payment computer 200 (e.g., the IEK generated in step 804 of method 800). Next, the decryption key for the transaction may be determined using the initial encryption key and the transaction counter included in the KSN. The decryption key may be used to decrypt the encrypted transaction data. In embodiments where the future key used to encrypt the transaction is a symmetric key, the decryption key may be the future key.

At step 1005, if the encrypted transaction data is verified (e.g., if the payment credentials match those on file for the user), and the transaction is otherwise approved, the payment processing network 500 sends an authorization response message to the merchant payment computer 200 approving the transaction.

It should be understood that FIG. 10 is intended to be descriptive and non-limiting. For example, in some embodiments of the invention, before approving the transaction, payment processing network 500 may provide the authorization request message to issuer computer 103, which may return an authorization response message to payment processing network 500. In some embodiments, payment processing network 500 may decrypt the encrypted transaction data in the authorization request message sent to issuer computer 103. In other embodiments, the sensitive data in the authorization request message sent to issuer computer 103 may remain encrypted.

In addition, in some embodiments, issuer computer 103 may decrypt the encrypted transaction data rather than, or in addition to, the payment processing network 500. For example, upon receipt of an authorization request message including encrypted transaction data and a key serial number, issuer computer 103 may be configured to verify the sensitive data and provide an authorization response message in a similar manner to steps 1003 and 1004 of method 1000.

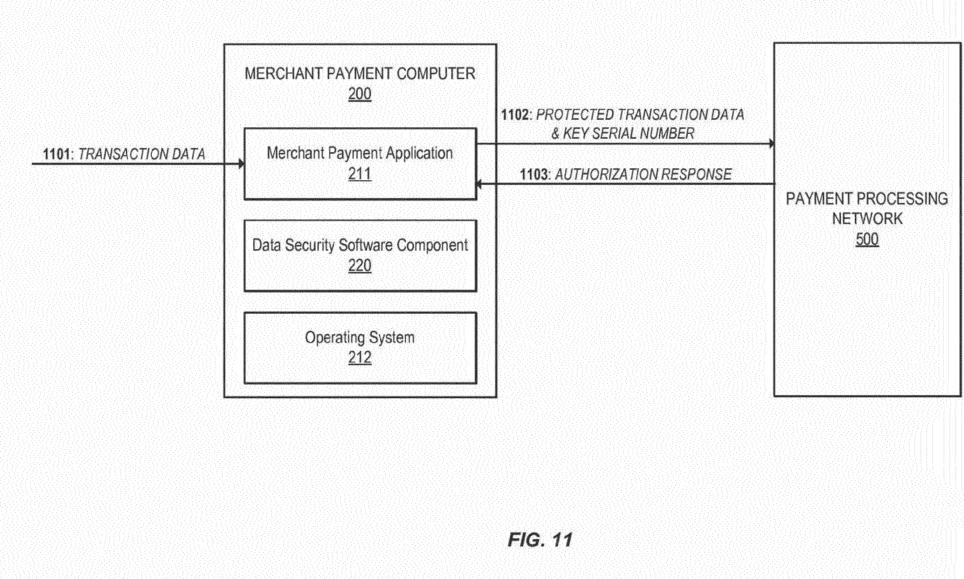

FIG. 11 shows a flow diagram illustrating a transaction conducted using merchant payment computer 200. At step 1101, a user may initiate the transaction by a purchase of goods or services. The user may provide transaction data, such as payment information, to a merchant payment application 211. Next, the merchant payment application 211 may send transaction data (which may include sensitive data) and the KSN to payment processing network 500.

Subsequently, at step 1102, payment processing network 500 may decrypt and verify the protected transaction data, and verify the device identifier for merchant payment computer 200. The decryption may be performed using a base derivation key and the KSN. For instance, in some embodiments, the initial key may be derived from a device identifier included in the KSN, and a future key used to encrypt the transaction may be derived from the initial key and a transaction counter included in the KSN.

At step 1103, payment processing network 500 sends an authorization response message to merchant payment application 211. In some embodiments, such as if a BDK or other key is used for the decryption, such a key may be stored in hardware security module (HSM) accessible to payment processing network 500.

### D. Types of Encryption Keys

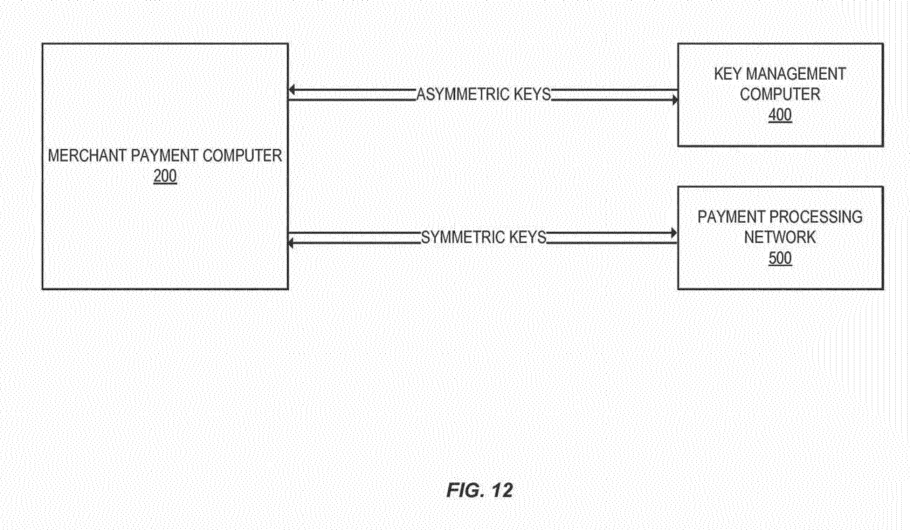

FIG. 12 shows a flow diagram illustrating the types of encryption keys used according to one embodiment of the invention. In the shown embodiment, asymmetric keys may be used for communication with the key management computer 400 (e.g., during key provisioning as shown in method 800), whereas symmetric keys may be used when conducting transactions (e.g., as shown in method 1000). For example, RSA or EEC-based asymmetric key pairs may be used to implement the transfer of an initial encryption key to merchant payment computer 200. Alternately, the asymmetric keys may be used to establish a symmetric session key by which data is securely transferred. The initial encryption key and future keys generated from the initial encryption key may be AES or DES-based symmetric keys. These symmetric keys may subsequently be used for conducting transactions.

### III. COMPUTER APPARATUS

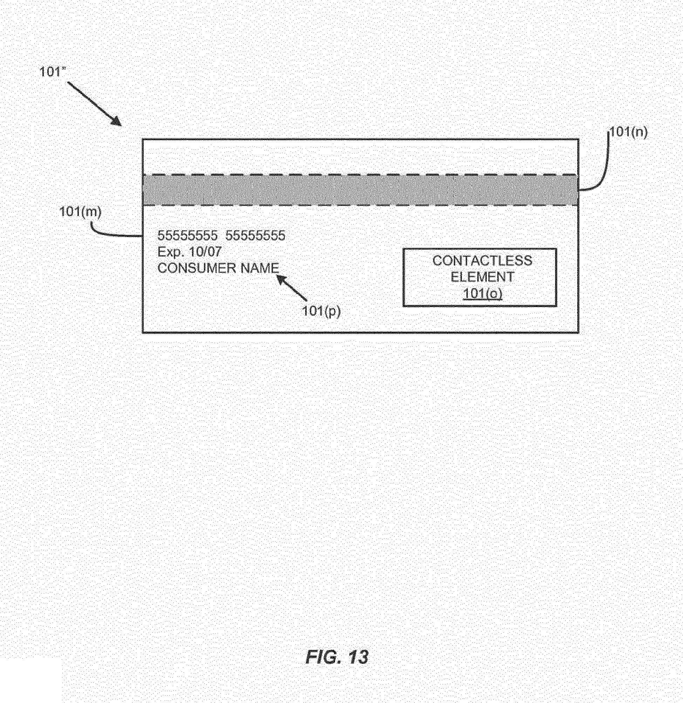

FIG. 13 shows an example of a payment device 101" in the form of a card. As shown, the payment device 101" comprises a plastic substrate 101(m). In some embodiments, a contactless element 101(ο) for interfacing with an access device 102 may be present on, or embedded within, the plastic substrate 101(m). User information 101(p) such as an account number, expiration date, and/or a user name may be printed or embossed on the card. A magnetic stripe 101(n) may also be on the plastic substrate 101(m). In some embodiments, the payment device 101" may comprise a microprocessor and/or memory chips with user data stored in them.

As noted above and shown in FIG. 13, the payment device 101" may include both a magnetic stripe 101(n) and a contactless element 101(o). In some embodiments, both the magnetic stripe 101(n) and the contactless element 101(o) may be in the payment device 101 In some embodiments, either the magnetic stripe 101(n) or the contactless element 101(ο) may be present in the payment device 101".

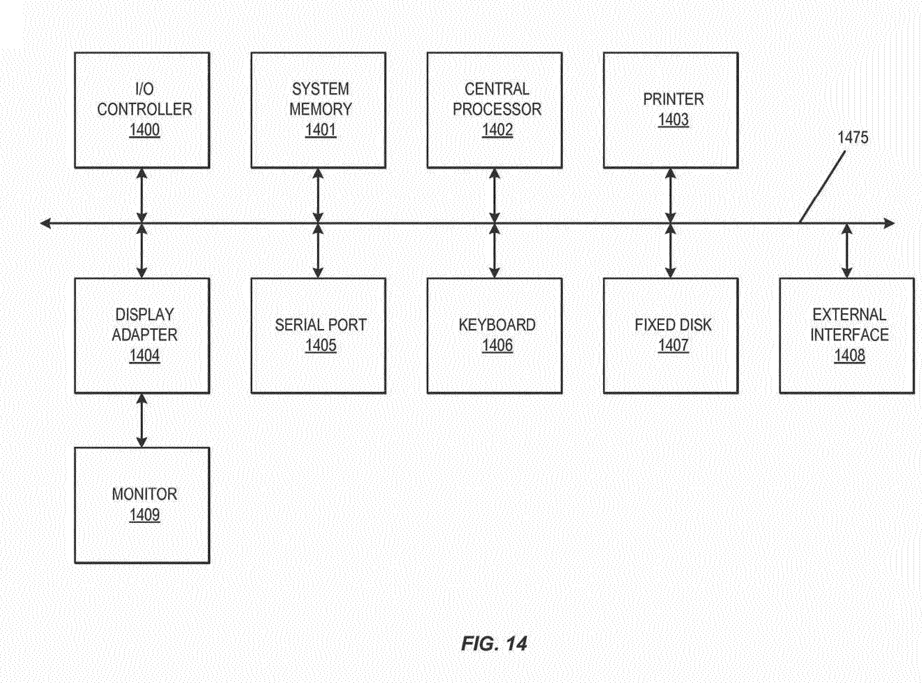

FIG. 14 is a high level block diagram of a computer system that may be used to implement any of the entities or components described above. The subsystems shown in FIG. 14 are interconnected via a system bus 1475. Additional subsystems include a printer 1403, keyboard 1406, fixed disk 1407, and monitor 1409, which is coupled to display adapter 1404. Peripherals and input/output (I/O) devices, which couple to I/O controller 1400, can be connected to the computer system by any number of means known in the art, such as a serial port. For example, serial port 1405 or external interface 1408 can be used to connect the computer apparatus to a wide area network such as the Internet, a mouse input device, or a scanner. The interconnection via system bus 1475 allows the central processor 1402 to communicate with each subsystem and to control the execution of instructions from system memory 1401 or the fixed disk 1407, as well as the exchange of information between subsystems. The system memory 1401 and/or the fixed disk may embody a computer-readable medium.

As described, the inventive service may involve implementing one or more functions, processes, operations or method steps. In some embodiments, the functions, processes, operations or method steps may be implemented as a result of the execution of a set of instructions or software code by a suitably-programmed computing device, microprocessor, data processor, or the like. The set of instructions or software code may be stored in a memory or other form of data storage element which is accessed by the computing device, microprocessor, etc. In other embodiments, the functions, processes, operations or method steps may be implemented by firmware or a dedicated processor, integrated circuit, etc.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application may be implemented as software code to be executed by a processor using any suitable computer language such as, for example, Java, C++ or Perl using, for example, conventional or object-oriented techniques. The software code may be stored as a series of instructions, or commands on a computer-readable medium, such as a random access memory (RAM), a read-only memory (ROM), a magnetic medium such as a hard-drive or a floppy disk, or an optical medium such as a CD-ROM. Any such computer-readable medium may reside on or within a single computational apparatus, and may be present on or within different computational apparatuses within a system or network.

While certain exemplary embodiments have been described in detail and shown in the accompanying drawings, it is to be understood that such embodiments are merely illustrative of and not intended to be restrictive of the broad invention, and that this invention is not to be limited to the specific arrangements and constructions shown and described, since various other modifications may occur to those with ordinary skill in the art.

As used herein, the use of "a", "an" or "the" is intended to mean "at least one", unless specifically indicated to the contrary.

## Claims

1. A payment processing system comprising:
a merchant payment computer (200) comprising:
a processor (201); and
memory (210) including instructions that, when executed on the processor (201), cause the merchant payment computer (200) to:
obtain an initial encryption key from a key management computer, the initial encryption key being derived from a base derivation key and a device identifier;
generate a plurality of future transaction encryption keys using the initial encryption key, each future transaction encryption key being associated with a key serial number; and
encrypt a message with one of the plurality of future transaction
encryption keys; and
a payment processing network computer (500) comprising:
a processor (501); and
memory (510) including instructions that, when executed with the processor (501), cause the payment processing network computer (500) to, at least:
receive, from the merchant payment computer (200), the encrypted message encrypted and a key serial number, the key serial number comprising the base derivation key, the device identifier, and a transaction counter;
derive the future transaction encryption key based on the base derivation key, the device identifier, and the transaction counter;
decrypt the message using the derived future transaction encryption key; and
transmit transaction details obtained from the decrypted message to an authorization entity.

2. The payment processing system of claim 1, wherein the instructions cause the payment processing network computer to retrieve the base derivation key.

3. The payment processing system of claim 1 or 2, wherein the instructions cause the payment processing network computer to generate the initial encryption key using the base derivation key and the device identifier, and to derive the future transaction encryption key using the initial encryption key and the transaction counter.

4. The payment processing system of any preceding claim, wherein the transaction counter comprises an integer from 0 through 65536 representing a number of transactions conducted.

5. The payment processing system of any preceding claim, wherein the message is an authorization request message associated with a transaction to be conducted by the merchant payment computer (200).

6. The payment processing system of claim 5, wherein the transaction details are used by the authorization entity to approve or decline the transaction.

7. The payment processing system of claim 1, wherein the instructions further cause the payment processing network computer to verify the transaction details obtained from the decrypted message prior to transmitting the transaction details obtained from the decrypted message to the authorization entity.

8. A method comprising:
receiving, by a payment processing network computer from a merchant payment computer (200), a message encrypted using a transaction encryption key of a plurality of transaction encryption keys and a key serial number, the key serial number comprising at least an identifier for a base derivation key, a device identifier, and a transaction counter, wherein prior to receiving the encrypted message, the merchant payment computer (200) obtains an initial encryption key from a key management computer, the initial encryption key being derived from the base derivation key and the device identifier, generates a plurality of future transaction encryption keys using the initial encryption key, each future transaction encryption key being associated with a key serial number, and encrypts the message with the transaction encryption key;
deriving, by the payment processing network computer, the future transaction encryption key based on the base derivation key, the device identifier, and the transaction counter;
decrypting, by the payment processing network computer, the message using the derived future transaction encryption key; and
transmitting, by the payment processing network computer, transaction details obtained from the decrypted message to an authorization entity.

9. The method of claim 8, further comprising retrieving, by the payment processing network computer, the base derivation key using the identifier for the base derivation key.

10. The method of claim 8 or 9, wherein deriving the transaction encryption key comprises generating the initial encryption key using the base derivation key and the device identifier and deriving the future transaction encryption key using the initial encryption key and the transaction counter.

## Patentansprüche

1. Zahlungsverarbeitungssystem, umfassend:
einen Händlerzahlungscomputer (200), der Folgendes umfasst:
einen Prozessor (201); und
Speicher (210), der Anweisungen beinhaltet, die bei Ausführung auf dem Prozessor (201) den
Händlerzahlungscomputer (200) veranlassen zum:
Erhalten eines anfänglichen Schlüssels für die Verschlüsselung von einem Schlüsselverwaltungscomputer,
wobei der anfängliche Schlüssel für die Verschlüsselung von einem Basisableitungsschlüssel und einer Gerätekennung abgeleitet wird;
Erzeugen einer Vielzahl von zukünftigen Schlüsseln für die Transaktionsverschlüsselung mithilfe des anfänglichen Schlüssels für die Verschlüsselung, wobei jeder zukünftige Schlüssel für die Transaktionsverschlüsselung einer Schlüsselseriennummer zugeordnet ist, und
Verschlüsseln einer Nachricht mit einem der Vielzahl von zukünftigen Schlüsseln für die Transaktionsverschlüsselung; und
einen zahlungsverarbeitenden Netzwerkcomputer (500), der Folgendes umfasst:
einen Prozessor (501); und
Speicher (510), der Anweisungen beinhaltet, die bei Ausführung auf dem Prozessor (501) den
zahlungsverarbeitenden Netzwerkcomputer (500) zu zumindest Folgendem veranlassen:
Empfangen, von dem Händlerzahlungscomputer (200), der verschlüsselten Nachricht, die verschlüsselt ist, und einer Schlüsselseriennummer, wobei die Schlüsselseriennummer den Basisableitungsschlüssel, die Gerätekennung und einen Transaktionszähler umfasst;
Ableiten des zukünftigen Schlüssels für die Transaktionsverschlüsselung basierend auf dem Basisableitungsschlüssel, der Gerätekennung und dem Transaktionszähler;
Entschlüsseln der Nachricht mithilfe des abgeleiteten zukünftigen Schlüssels für die Transaktionsverschlüsselung; und
Übertragen von Transaktionsdetails, die aus der entschlüsselten Nachricht erhalten wurden, an eine Autorisierungseinheit.

2. Zahlungsverarbeitungssystem nach Anspruch 1, wobei die Anweisungen den zahlungsverarbeitenden Netzwerkcomputer veranlassen, den Basisableitungsschlüssel abzurufen.

3. Zahlungsverarbeitungssystem nach Anspruch 1 oder 2, wobei die Anweisungen den zahlungsverarbeitenden Netzwerkcomputer veranlassen, den anfänglichen Schlüssel für die Verschlüsselung mithilfe des Basisableitungsschlüssels und der Gerätekennung zu erzeugen und den zukünftigen Schlüssel für die Transaktionsverschlüsselung mithilfe des anfänglichen Schlüssels für die Verschlüsselung und des Transaktionszählers abzuleiten.

4. Zahlungsverarbeitungssystem nach einem der vorhergehenden Ansprüche, wobei der Transaktionszähler eine ganze Zahl von 0 bis 65536 umfasst, die eine Anzahl von durchgeführten Transaktionen repräsentiert.

5. Zahlungsverarbeitungssystem nach einem der vorhergehenden Ansprüche, wobei die Nachricht eine Autorisierungsanforderungsnachricht ist, die einer Transaktion zugeordnet ist, die durch den Händlerzahlungscomputer (200) ausgeführt werden soll.

6. Zahlungsverarbeitungssystem nach Anspruch 5, wobei die Transaktionsdetails von der Autorisierungseinheit verwendet werden, um die Transaktion zu genehmigen oder abzulehnen.

7. Zahlungsverarbeitungssystem nach Anspruch 1, wobei die Anweisungen den zahlungsverarbeitenden Netzwerkcomputer ferner veranlassen, die Transaktionsdetails, die aus der entschlüsselten Nachricht erhalten werden, vor dem Übertragen der Transaktionsdetails, die aus der entschlüsselten Nachricht erhalten werden, an die Autorisierungseinheit zu verifizieren.

8. Verfahren, umfassend:
Empfangen, durch einen zahlungsverarbeitenden Netzwerkcomputer, von einem Händlerzahlungscomputer (200), einer Nachricht, die mithilfe eines Schlüssels für die Transaktionsverschlüsselung einer Vielzahl von Schlüsseln für die Transaktionsverschlüsselung und einer Schlüsselseriennummer verschlüsselt wurde, wobei die Schlüsselseriennummer zumindest eine Kennung für einen Basisableitungsschlüssel, eine Gerätekennung und einen Transaktionszähler umfasst, wobei der
Händlerzahlungscomputer (200), vor dem Empfangen der verschlüsselten Nachricht, einen anfänglichen Schlüssel für die Verschlüsselung von einem Schlüsselverwaltungscomputer erhält, wobei der anfängliche Schlüssel für die Verschlüsselung von dem Basisableitungsschlüssel und der Gerätekennung abgeleitet wird, eine Vielzahl von zukünftigen Schlüsseln für die Transaktionsverschlüsselung mithilfe des anfänglichen Schlüssels für die Verschlüsselung erzeugt,
wobei jeder zukünftige Schlüssel für die Transaktionsverschlüsselung einer Schlüsselseriennummer zugeordnet ist und die Nachricht mit dem Schlüssel für die Transaktionsverschlüsselung verschlüsselt;
Ableiten, durch den zahlungsverarbeitenden Netzwerkcomputer, des zukünftigen Schlüssels für die
Transaktionsverschlüsselung basierend auf dem Basisableitungsschlüssel, der Gerätekennung und dem Transaktionszähler;
Entschlüsseln, durch den zahlungsverarbeitenden Netzwerkcomputer, der Nachricht mithilfe des abgeleiteten zukünftigen Schlüssels für die Transaktionsverschlüsselung; und
Übertragen, durch den zahlungsverarbeitenden Netzwerkcomputer, von Transaktionsdetails, die aus der entschlüsselten Nachricht erhalten wurden, an eine Autorisierungseinheit.

9. Verfahren nach Anspruch 8, das ferner ein Abrufen, durch den zahlungsverarbeitenden Netzwerkcomputer, des Basisableitungsschlüssels mithilfe der Kennung für den Basisableitungsschlüssel umfasst.

10. Verfahren nach Anspruch 8 oder 9, wobei das Ableiten des Schlüssels für die Transaktionsverschlüsselung ein Erzeugen des anfänglichen Schlüssels für die Verschlüsselung mithilfe des Basisableitungsschlüssels und der Gerätekennung, und ein Ableiten des zukünftigen Schlüssels für die Transaktionsverschlüsselung mithilfe des anfänglichen Schlüssels für die Verschlüsselung und des Transaktionszählers umfasst.

## Revendications

1. Système de traitement de paiement comprenant :
un ordinateur de paiement marchand (200) comprenant :
un processeur (201) ; et
une mémoire (210) comprenant des instructions qui,
lorsqu'elles sont exécutées sur le processeur (201),
amènent l'ordinateur de paiement marchand (200) à :
obtenir une clé de cryptage initiale à partir d'un ordinateur de gestion de clé, la clé de cryptage initiale étant dérivée d'une clé de dérivation de base et d'un identifiant de dispositif ;
générer une pluralité de clés de cryptage de transaction future à l'aide de la clé de cryptage initiale, chaque clé de cryptage de transaction future étant associée à un numéro de série unique, et
crypter un message avec une parmi la pluralité de clés de cryptage de transaction future ; et
un ordinateur de réseau de traitement de paiement (500) comprenant :
un processeur (501) ; et
une mémoire (510) comprenant des instructions qui,
lorsqu'elles sont exécutées avec le processeur (501), amènent l'ordinateur de réseau de traitement de paiement (500) à, au moins :
recevoir, à partir de l'ordinateur de paiement marchand (200), le message crypté et un numéro de série de clé, le numéro de série de clé comprenant la clé de dérivation de base, l'identifiant de dispositif, et un compteur de transactions ;
dériver la clé de cryptage de transaction future sur base de la clé de dérivation de base, de l'identifiant de dispositif et du compteur de transactions ;
décrypter le message à l'aide de la clé de cryptage de transaction future dérivée ; et
transmettre des détails de transaction obtenus à partir du message décrypté à une entité d'autorisation.

2. Système de traitement de paiement selon la revendication 1, dans lequel les instructions amènent l'ordinateur de réseau de traitement de paiement à récupérer la clé de dérivation de base.

3. Système de traitement de paiement selon la revendication 1 ou 2, dans lequel les instructions amènent l'ordinateur de réseau de traitement de paiement à générer la clé de cryptage initiale à l'aide de la clé de dérivation de base et de l'identifiant de dispositif, et à dériver la clé de cryptage de transaction future à l'aide de la clé de cryptage initiale et du compteur de transactions.

4. Système de traitement de paiement selon l'une quelconque des revendications précédentes, dans lequel le compteur de transactions comprend un entier de 0 à 65536 représentant un nombre de transactions effectuées.

5. Système de traitement de paiement selon l'une quelconque des revendications précédentes, dans lequel le message est un message de demande d'autorisation associé à une transaction devant être effectuée par l'ordinateur de paiement marchand (200).

6. Système de traitement de paiement selon la revendication 5, dans lequel les détails de transaction sont utilisés par l'entité d'autorisation pour autoriser ou refuser la transaction.

7. Système de traitement de paiement selon la revendication 1, dans lequel les instructions amènent en outre l'ordinateur de réseau de traitement de paiement à vérifier les détails de transaction obtenus à partir du message décrypté avant la transmission des détails de transaction obtenus à partir du message décrypté à l'entité d'autorisation.

8. Procédé comprenant :
la réception, par un ordinateur de réseau de traitement de paiement à partir d'un ordinateur de paiement marchand (200), d'un message crypté à l'aide d'une clé de cryptage de transaction parmi une pluralité de clés de cryptage de transaction et d'un numéro de série de clé, le numéro de série de clé comprenant au moins un identifiant pour une clé de dérivation de base, un identifiant de dispositif, et un compteur de transactions, dans lequel avant la réception du message crypté, l'ordinateur de paiement marchand (200) obtient une clé de cryptage initiale à partir d'un ordinateur de gestion de clé, la clé de cryptage initiale étant dérivée de la clé de dérivation de base et de l'identifiant de dispositif, génère une pluralité de clés de cryptage de transaction future à l'aide de la clé de cryptage initiale, chaque clé de cryptage de transaction future étant associée à un numéro de série de clé, et crypte le message avec la clé de cryptage de transaction ;
la dérivation, par l'ordinateur de réseau de traitement de paiement, de la clé de cryptage de transaction future sur base de la clé de dérivation de base, de l'identifiant de dispositif, et du compteur de transaction ;
le décryptage, par l'ordinateur de réseau de traitement de paiement, du message à l'aide de la clé de cryptage de transaction future dérivée ; et
la transmission, par l'ordinateur de réseau de traitement de paiement, de détails de transaction obtenus à partir du message décrypté à une entité d'autorisation.

9. Procédé selon la revendication 8, comprenant en outre la récupération, par l'ordinateur de réseau de traitement de paiement, de la clé de dérivation de base à l'aide de l'identifiant pour la clé de dérivation de base.

10. Procédé selon la revendication 8 ou 9, dans lequel la dérivation de la clé de cryptage de transaction comprend la génération de la clé de cryptage initiale à l'aide de la clé de dérivation de base et de l'identifiant de dispositif et la dérivation de la clé de cryptage de transaction future à l'aide de la clé de cryptage initiale et du compteur de transaction.
